Europäisches Patentamt

European Patent Office

Office européen des brevets

(11) Veröffentlichungsnummer: **0 503 295 A1**

## (12) EUROPÄISCHE PATENTANMELDUNG

(21) Anmeldenummer: **92102349.5**

(22) Anmeldetag: **12.02.92**

(51) Int. Cl.5: **G01N 27/409**

(30) Priorität: **12.03.91 DE 4107908**

(43) Veröffentlichungstag der Anmeldung:
**16.09.92 Patentblatt 92/38**

(84) Benannte Vertragsstaaten:
**DE ES FR GB IT SE**

(71) Anmelder: **SIEMENS AKTIENGESELLSCHAFT**
**Wittelsbacherplatz 2**
**W-8000 München 2(DE)**

(72) Erfinder: **Lampe, Uwe, Dr.**
**Sonnenstrasse 4**
**W-8058 Erding(DE)**
Erfinder: **Hanrieder, Wolfgang, Dr.**
**Winkstrasse 8**
**W-8000 München 70(DE)**
Erfinder: **Meixner, Hans, Dr.**
**Max-Planck-Strasse 5**
**W-8013 Haar(DE)**

(54) **Gehäuse für Abgassensoren.**

(57) Ein Gehäuse für einen schnellen Abgassensor zur zylinderselektiven Lambdamessung in einem Verbrennungsmotor, das hohlzylinderförmig ist und in seinem Umfang zumindest zwei rotationssymmetrisch angeordnete, parallel zur Achse des hohlzylinderförmigen Gehäuses liegende schlitzförmige Öffnungen (2) aufweist, deren Ränder sich jalousieartig überlappen, wobei die rotationssymmetrische Anordnung der Öffnungen (2) gestattet, das Gehäuse und damit den darin montierten Abgassensor (3) in beliebiger Drehlage zu einem Abgasstrom in dem betreffenden Rohr einzubauen.

FIG 2

EP 0 503 295 A1

Zur zylinderselektiven Lambdaregelung werden in Zukunft vorteilhafterweise sogenannte schnelle Abgassensoren eingesetzt werden, deren Sensoreffekt auf der Gasempfindlichkeit der elektrischen Leitfähigkeit von halbleitenden Metalloxiden beruht. Bislang erfolgt die Lambdaregelung mit sog. langsamen Sensoren, die nur in der Lage sind, den stationären Betrieb ausreichend zu erfassen. Mit den zu erwartenden neuen Sonden wird es möglich sein, auch die instationären Betriebszustände eines Verbrennungsmotors zu regeln. Als gassensitives Material ist vorzugsweise Strontiumtitanat oder Ceroxid zu verwenden. Um eine ausreichend hohe Ansprechgeschwindigkeit zu erzielen, sind derartige gasempfindliche Metalloxide als Dünnschicht oder als Dickschicht auf das Substrat des betreffenden Sensors aufzubringen.

Das Abgas von Verbrennungsmotoren ist bekanntlich mit Partikeln beladen. Diese Partikel entstehen aus den Additiven und den Verunreinigungen der Betriebsstoffe (Schmieröl, Benzin, usw.) und durch Motorteile-Abrieb. Die Partikel sind typischerweise ein bis zwei Mikrometer groß und bestehen unter anderem aus Eisenoxiden. Abgelagerte Partikelschichten weisen eine erhebliche elektrische Leitfähigkeit auf. Bei den Dick- oder Dünnschicht-Sensoren schließen massive Ablagerungen die Sensorschicht kurz. Schon eine geringfügige Ablagerung dieser Partikel auf den gassensitiven Elementen des Sensors verändert deren gassensitive und elektrische Eigenschaften und führt zu einer Degradation, so daß die angestrebte Lebensdauer des Sensors nicht erreichbar ist.

Abgassensoren mit gassensitiven Dünnschichten sind bisher nicht bekannt. Die bekannten elektrochemischen oder resistiven Abgassensoren werden als Bulk-Keramik oder Dickschicht ausgeführt. Sie sind gegen Verunreinigungen durch Partikel deutlich weniger empfindlich, erreichen aber nicht die für eine zylinderselektive Lambdamessung notwendigen hohen Ansprechgeschwindigkeiten. Zur Verhinderung von massiven Ablagerungen werden die "Visieröffnungen" des Sensors möglichst klein gehalten sowie der Sensor mit einer inerten, porösen Schutzschicht überzogen. Auf eine optimale Durchströmung des Gehäuses und ein vollständiges Fernhalten der Partikel wird bei den bekannten Lösungen kein besonderer Wert gelegt, da geringfügige Ablagerungen die Sensorfunktion nicht beeinträchtigen.

Der vorliegenden Erfindung liegt die Aufgabe zugrunde, ein Gehäuse für schnelle Abgassensoren der eingangs genannten Art zu schaffen, durch das ein direktes Anströmen des Sensors durch das Abgas verhindert wird, wodurch die Ablagerung von Partikeln verhindert werden soll, und bei dem der Gasaustausch nicht behindert wird, so daß die Ansprechgeschwindigkeit des Sensors nicht verringert wird.

Zur Lösung dieser Aufgabe wird ein Gehäuse für schnelle Abgassensoren der eingangs genannten Art und gemäß dem Oberbegriff des Patentanspruchs 1 vorgeschlagen, das durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmalen gekennzeichnet.

Im folgenden wird die Erfindung anhand mehrerer Figuren im einzelnen beschrieben.

Fig. 1    zeigt die Seitenansicht eines Sensorgehäuses gemäß der vorliegenden Erfindung.

Fig. 2    zeigt eine schematische Schnittansicht des Sensorgehäuses längs einer Linie x,x in Fig. 1.

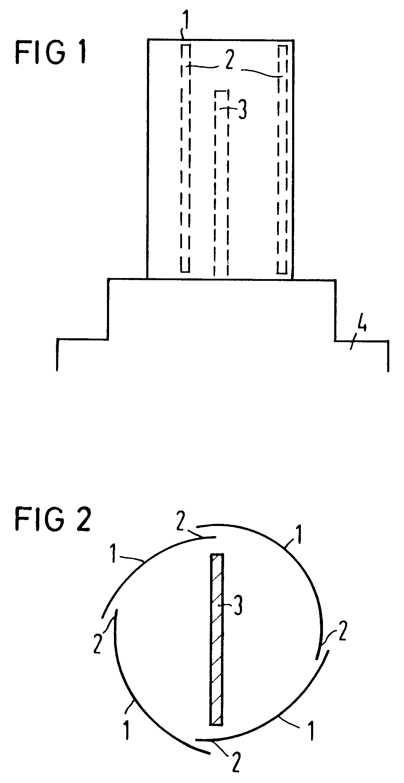

Das erfindungsgemäße Gehäuse für den Sensor weist eine Vielzahl von als Visier dienende Öffnungen 2 auf, die als Partikelfalle wirken und eine Ablagerung von Partikeln aus dem Abgas verhindern sowie einen schnellen Gasaustausch erlauben, um die Ansprechgeschwindigkeit nicht herabzusetzen. Bei dem in Fig. 1 gezeigten bevorzugten Ausführungsbeispiel der Erfindung sind vier schmale Schlitze, vorzugsweise rotationssymmetrisch vorgesehen. Ein jalousieartiges Überlappen der jeweiligen Wandungsenden bei den Schlitzen wird beispielsweise durch geeignetes Biegen der Gehäusewandung erreicht. Dieser Aufbau hat folgende Vorteile:

- Ein direktes Anströmen des Sensors durch das Abgas wird verhindert, wodurch die Ablagerung von Partikeln verhindert werden kann.
- Der Gasaustausch wird nicht behindert, so daß die Ansprechgeschwindigkeit der Sensoren nicht verringert wird.
- Der Sensor ist rotationssymmetrisch und kann in beliebiger Lage zum Abgasstrom eingebaut werden.

Fig. 2 zeigt, wie bereits angegeben, eine schematische Schnittansicht des Sensorgehäuses gemäß Fig. 1, wobei die Visiere 1 mit ihren schlitzförmigen Öffnungen 2 dargestellt sind. Aus Fig. 2 ist ersichtlich, daß sich die Visierwandungen jalousieartig überlappen. Innerhalb des Sensorgehäuses ist ein Abgassensor 3 in an sich bekannter Weise angeordnet und montiert. Das Sensorgehäuse ist in üblicher Weise auf einem Basisteil 4 (vgl. Fig. 1) aufgebracht, das vorzugsweise ein Schraubgewinde zum Einschrauben in ein Abgasrohr oder dergl. aufweist.

Die Anzahl der schlitzförmigen Öffnungen 2 kann statt 4 auch beispielsweise 3 oder 5 betragen.

Das Gehäuse besteht aus einem hitzebeständigen, korrosionsfreien Material, vorzugsweise aus Edelstahl, z. B. V4A.

**Patentansprüche**

1.  Gehäuse für einen schnellen Abgassensor zur zylinderselektiven Lambdamessung in einem Verbrennungsmotor,
    **dadurch gekennzeichnet,** daß das Gehäuse hohlzylinderförmig ist und in seinem Umfang zumindest zwei rotationssymmetrisch angeordnete, parallel zur Achse des hohlzylinderförmigen Gehäuses liegende schlitzförmige Öffnungen (2) aufweist, deren Ränder sich jalousieartig überlappen.

2.  Gehäuse nach Anspruch 1,
    **dadurch gekennzeichnet,** daß die Anzahl der schlitzförmigen Öffnungen (2) 3 beträgt.

3.  Gehäuse nach Anspruch 1,
    **dadurch gekennzeichnet,** daß die Anzahl der schlitzförmigen Öffnungen (2) 4 beträgt.

4.  Gehäuse nach Anspruch 1,
    **dadurch gekennzeichnet,** daß die Anzahl der schlitzförmigen Öffnungen (2) 5 beträgt.

5.  Gehäuse nach einem der Ansprüche 1 bis 4,
    **dadurch gekennzeichnet,** daß als Material ein hitzebeständiges und korrosionsfreies Material verwendet ist.

6.  Gehäuse nach einem der vorhergehenden Ansprüche,
    **dadurch gekennzeichnet,** daß das Material ein Edelstahl ist.

FIG 1

FIG 2

## EINSCHLÄGIGE DOKUMENTE

EP 92102349.5

| Kategorie | Kennzeichnung des Dokuments mit Angabe, soweit erforderlich. der maßgeblichen Teile | Betrifft Anspruch | KLASSIFIKATION DER ANMELDUNG (Int Cl.⁵) |
|---|---|---|---|
| A | CH - A - 676 292 (DAIMLER-BENZ) * Fig. 2; Spalte 3; Zeilen 33-39 * -- | 1 | G 01 N 27/409 |
| A | DE - A - 3 843 089 (NGK) * Fig. 1a-2b; Zusammenfasssung * -- | 1 | |
| A | DE - B - 2 326 086 (BOSCH) * Fig.; Ansprüche * -- | 1 | |
| A | DE - A - 2 348 505 (BOSCH) * Fig.; Ansprüche * ---- | 1 | |

RECHERCHIERTE SACHGEBIETE (Int. Cl.⁵)

G 01 N

Der vorliegende Recherchenbericht wurde für alle Patentansprüche erstellt.

| Recherchenort | Abschlußdatum der Recherche | Prüfer |
|---|---|---|
| WIEN | 25-05-1992 | NARDAI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82